# EUROPEAN PATENT SPECIFICATION

(11) **EP 1 816 327 B1**
(45) Date of publication and mention of the grant of the patent: **29.06.2011**
(21) Application number: 07001010.3
(22) Date of filing: 18.01.2007
(51) Int. Cl.: F02C 9/54, F02C 6/08, F02C 9/52

(54) **Control method and control system of gas turbine**
Steuerverfahren und Steuersystem für eine Gasturbine
Procédé de contrôle et système de contrôle d'une turbine à gaz

(30) Priority: 01.02.2006 JP 2006024048
(43) Date of publication of application: 08.08.2007
(73) Proprietor: HITACHI, LTD., Chiyoda-ku Tokyo 100-8280 (JP)
(72) Inventor: Hirata, Yoshitaka c/o Hitachi Ltd. Intellectual, 1-6-1 Marunouchi Chiyoda- Tokyo 100-8220 (JP); Yoshida, Shouhei c/o Hitachi Ltd. Intellectual, 1-6-1 Marunouchi Chiyoda- Tokyo 100-8220 (JP); Takahashi, Yasuo c/o Hitachi Ltd. Intellectual, 1-6-1 Marunouchi Chiyoda- Tokyo 100-8220 (JP); Sasao, Toshifumi c/o Hitachi Ltd. Intellectual, 1-6-1 Marunouchi Chiyoda- Tokyo 100-8220 (JP); Inoue, Hiroshi c/o Hitachi Ltd. Intellectual, 1-6-1 Marunouchi Chiyoda- Tokyo 100-8220 (JP); Murata, Hidetaro c/o Hitachi Ltd. Intellectual, 1-6-1 Marunouchi Chiyoda- Tokyo 100-8220 (JP); Ito, Kazuyuki c/o Hitachi Ltd. Intellectual, 1-6-1 Marunouchi Chiyoda- Tokyo 100-8220 (JP)
(74) Representative: MERH-IP Matias Erny Reichl Hoffmann

(56) References cited:
- EP-A- 1 548 236
- US-A- 4 406 117

## Description

### BACKGROUND OF THE INVENTION

### 1. Field of the Invention

The present invention relates to a control method and a control system of a gas turbine.

### 2. Description of the Related Art

Generally, in a liquid fueled combustor, liquid fuel is atomized by a fuel injector and mixing of small-diameter fuel particles and compressed air is promoted in a combustion chamber, followed by combustion of a resulting mixture. The fuel injector for atomizing liquid fuel is primarily classified into an air blast fuel injector in which liquid fuel is atomized by utilizing shearing forces of a medium, e.g., high-pressure air, other than the liquid fuel, and a pressure atomizing fuel injector in which liquid fuel is atomized by supply pressure of the liquid fuel.

Among those two types of the fuel injectors, the air blast fuel injector necessitates mixing of the fuel and the high-pressure air in the atomizing process, and therefore requires an air source for supplying air and associated auxiliaries. Such a requirement raises a problem when a gas turbine is installed in urban areas where an installation space is restricted.

Taking into account the above-mentioned problem, a fuel injector not requiring the high-pressure air, etc., is proposed as a one-fluid fuel injector in which only liquid fuel is used and atomized by supply pressure of the liquid fuel, as disclosed in Patent Document 1 (JP,B 7-62522). In the one-fluid fuel injector, the supply pressure of the liquid fuel is raised to increase the jet velocity of the liquid fuel for atomization of the liquid fuel, That.type of the fuel injector is advantageous in reducing the initial cost and the operating cost because neither the air source for supplying the high-pressure air nor the associated auxiliaries are required. Further, the installation space for the gas turbine can be reduced.

EP 1 548 236 A1 shows a method of controlling an operation of a 2-shaft gas turbine which comprises, when an operation of a 2-shaft gas turbine is changed to reduce a load from a predetermined load, a first step of reducing a rotating speed of a compressor and a second step of reducing a working airflow in the compressor.

US 4,406,117 describes a method of controlling an operation of a 2-shaft gas turbine which comprises, when an operation of a 2-shaft gas turbine is changed to reduce a load from a predetermined load, a first step of reducing a rotating speed of a compressor and a second step of reducing a working airflow in the compressor. With the method, a reduction in compressor efficiency during partial load operation of the gas turbine can be suppressed, and a surge margin of the compressor can be ensured.

### SUMMARY OF THE INVENTION

In the pressure atomizing liquid fuel injector, however, the supply pressure of the liquid fuel must be raised to increase the jet velocity of the liquid fuel for atomization of the liquid fuel. This causes the problem that the fuel droplet diameter is increased under the condition where the fuel supply pressure is low and the fuel flow rate is small, as occurred in a part load region. If fuel droplets supplied to a combustion chamber are large in size, the mixing of fuel and air is impaired and the oxidation reaction of the fuel is delayed, whereby generation of carbonaceous particulate matters is accelerated. Further, the increase of the fuel droplet diameter enlarges sizes of the carbonaceous particulate matters generated, thus increasing emissions of the carbonaceous particulate matters contained in combustion gas that is discharged from a combustor to a gas turbine.

In view of the state of the art mentioned above, an object of the present invention is to suppress emissions of carbonaceous particulate matters generated in a part load region of a gas turbine while ensuring the advantages of the pressure atomizing liquid fuel injector.

The object is solved according to the independent claim. Dependent claims describe preferred embodiments of the present invention.

To achieve the above object, in a control method and a control system of a gas turbine according to the present invention, a pressure atomizing liquid fuel injector is mounted in a combustor, and the flow rate of a working fluid for a compressor is reduced in a part load region of the gas turbine to be smaller than a flow rate of the working fluid for the compressor, which is set such that performance of the compressor is maximized.

According to the present invention, emissions of carbonaceous particulate matters generated in the part load region of the gas turbine can be suppressed while ensuring the advantages of the pressure atomizing liquid fuel injector.

### BRIEF DESCRIPTION OF THE DRAWINGS

Fig. 1 is an overall schematic view of a gas turbine plant according to each of first and second embodiments of the present invention;
Fig. 2 is a graph showing one example of a characteristic of emissions of carbonaceous particulate matters versus load of a gas turbine, which is obtained in a combustor provided with a pressure atomizing liquid fuel injector;
Fig. 3 is a chart showing one example of a gas turbine control process during a period from start of the gas turbine plant until reaching a base load condition;
Fig. 4 is an overall schematic view of a gas turbine plant according to a third embodiment of the present invention.

### DESCRIPTION OF THE PREFERRED EMBODIMENTS

A gas turbine system in which is employed the present invention is intended to suppress emissions of carbonaceous particulate matters in a part load region of a gas turbine with no need of installing new equipment in the existing system which includes a combustor provided with a pressure atomizing liquid fuel injector.

A gas turbine plant according to the present invention will be described below in connection with embodiments by referring to the drawings.

### [First Embodiment]

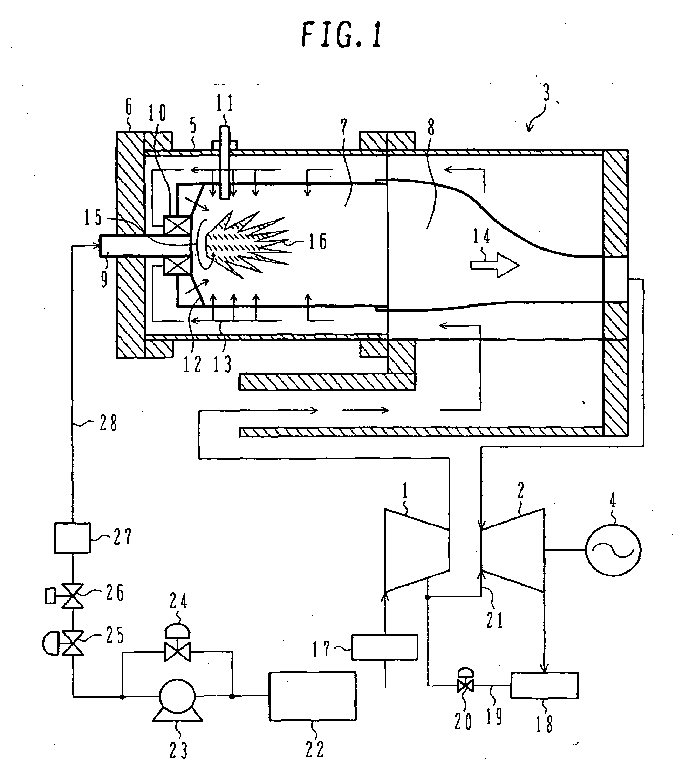

A first embodiment is described with reference to Figs. 1-3.

Fig. 1 is an overall schematic view of a gas turbine plant. The gas turbine plant comprises primarily a compressor 1 for compressing air, which serves as a working fluid, and generating high-pressure compressed air 13, a combustor 3 for mixing and burning the compressed air 13 introduced from the compressor 1 with fuel, to thereby produce combustion gas 14, and a turbine 2 to which is introduced the combustion gas 14 produced by the combustor 3. Respective shafts of the compressor 1 and the turbine 2 are coupled to each other.

An inlet guide vane 17 is disposed at an inlet of the compressor 1. The flow rate of air taken into the compressor 1 is adjusted by controlling the opening of the inlet guide vane 17. A cooling air duct 21 is branched from midway a main flow passage disposed in the compressor 1 to bleed a part of the working fluid for introduction to a high-temperature section of the turbine 2. The bled working fluid (i.e., the compressed air 13 under compression) is used to cool turbine blades. Further, a bleed system is provided which comprises a bleed duct 19 branched from midway the cooling air duct 21 to release the working fluid compressed by the compressor 1 to an exhaust diffuser 18 of the turbine 2 while bypassing the combustor 3 and the turbine 2, and a bleed valve 20 for controlling the flow rate of air bled to the exhaust diffuser 18 through the bleed duct 19. The bleed system is intended to protect the compressor 1 and the turbine 2 in the event of urgent load dump due to, e.g., the occurrence of an abnormality in the plant. Usually, in the event of urgent load dump, the flow rate of the compressed air 13 supplied to the combustor 3 is reduced by opening the bleed valve 20. By further reducing the flow rate of the fuel, a driving force applied to the turbine 2 can be quickly weakened to prevent over-speed rotation of the turbine 2 in a no-load state. During the ordinary operation, the bleed valve 20 is kept closed. Exhaust gas discharged through the exhaust diffuser 18 is released to the open air, i.e., the atmosphere, through a stack.

On the other hand, the combustor 3 is in the form of a pressure vessel enclosed by an outer casing 5 and an end cover 6. The combustor 3 contains therein a inner casing 7 in which is produced the combustion gas, a fuel injector (pressure atomizing liquid fuel injector) 9 for atomizing the fuel, a swirler 10 for swirling the compressed air 13, and a spark plug 11 for causing ignition in the combustor 3. The combustion chamber is formed inside the inner casing 7. The fuel injector 9 injects the fuel in a pressure atomizing manner, and it is disposed upstream of the inner casing 7 at an axial position. The swirler 10 is disposed around the fuel injector 9 in order to hold a diffusion flame 16. An inner casing cap 12 is mounted to an outer periphery of the swirler 10.

With the construction described above, the compressed air 13 supplied from the compressor 1 flows through an annular air flow passage formed between the outer casing 5 and the inner casing 7, followed by being introduced to the interior of the inner casing 7 through not only combustion holes and cooling holes which are formed in a wall of the inner casing 7 and the inner casing cap 12, but also from the swirler 10.

A fuel supply system includes a fuel tank 22, a main pump 23, a pressure control valve 24, a fuel shutoff valve 26, a flow control valve 25, a fuel flowmeter 27, and a fuel supply line 28. The pressure of liquid fuel is boosted by the main pump 23 and is set to a predetermined level by the pressure control valve 24 installed in a bypass line of the main pump 23. The boosted liquid fuel is supplied to the pressure atomizing liquid fuel injector 9 after passing through the flow control valve 25 of which opening is adjusted to a predetermined value, the fuel shutoff valve 26, and the fuel flowmeter 27.

The fuel supplied the fuel injector 9 is atomized to fine fuel particles and injected into the inner casing 7. The compressed air 13 and the fuel both supplied to the inner casing 7 are mixed with each other therein, and a resulting gas mixture is ignited within the inner casing 7 by the spark plug 11 for combustion. The combustion gas 14 produced with the combustion of the gas mixture is supplied to the turbine 2 through the transition piece 8, thereby driving the turbine 2. Thus, a generator 4 coupled to the turbine 2 is driven for power generation.

A control method for the gas turbine plant according to this first embodiment will be described below.

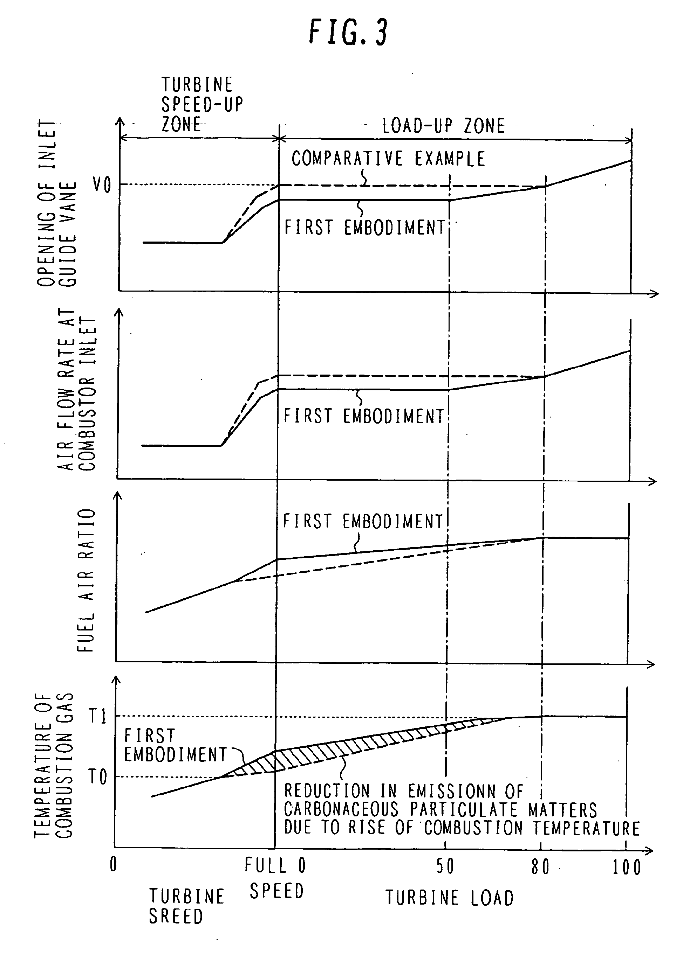

Fig. 3 shows one example of a gas turbine control process during a period from start of the gas turbine plant until reaching a base load condition. The horizontal axis in Fig. 3 represents a turbine speed and a turbine load each indicating the operating state of the gas turbine. The vertical axis represents changes in the opening of the inlet guide vane 17, in the corresponding flow rate of air at an inlet of the combustor, in a fuel air ratio, i.e., a flow rate ratio of fuel to air, and in the temperature of the combustion gas discharged from the combustor. A broken line in Fig. 3 represents a comparative example for easier understanding of this first embodiment based on comparison. A solid line represents the control process according to this first embodiment.

A description is first made of the comparative example. The term "turbine speed-up zone" means the operating state covering start of the gas turbine to the condition where the gas turbine begins to undertake a load from the generator 4. In the turbine speed-up zone, the opening of the inlet guide vane 17 is constant before the turbine speed reaches a predetermined value. Therefore, the flow rate of the fuel supplied to the combustor is increased to increase the fuel air ratio, thereby raising the temperature of the combustion gas. After the turbine speed reaches the predetermined value midway the turbine speed-up zone, the opening of the inlet guide vane 17 is increased to a prescribed opening V0. The prescribed opening V0 represents an opening prescribed such that, in a part load region, neither surging nor icing is caused in the compressor 1 and the performance of the compressor 1 is maximized in consideration of the blade shape performance of the compressor 1 as well. The term "surging" means a phenomenon that when a pressure ratio of the compressor 1 is increased, there abruptly occur pressure variations, violent pulsations of air flows, and mechanical vibration with strong noise at a certain pressure ratio, and the operation of the compressor 1 loses stability. Also, the term "icing" means that when the opening of the inlet guide vane 17 is throttled under the condition where the atmospheric temperature is low, the air velocity (Mach number) at an outlet of the inlet guide vane 17 is increased, whereupon the fluid temperature is lowered and moisture contained in the atmosphere is frozen. The occurrence of the icing may cause a risk that solidified moisture (block of ice) strikes against the blades of the compressor 1 and the blades are damaged. Therefore, the opening of the inlet guide vane 17 must be set so as not to cause the icing. Additionally, in this first embodiment, the term "part load region" means a region that is defined as a load-up zone except for the base load condition (100%).

When the gas turbine begins to undertake a load from the generator 4, it comes into the load-up zone. Thereafter, in a load region of 0 - 80%, the load is increased while the opening of the inlet guide vane 17 is kept at the prescribed opening V0. The operation of increasing the opening of the inlet guide vane 17 is started again when the load of the gas turbine is near 70 - 80%, depending on control setting of, e.g., the exhaust temperature. Finally, the inlet guide vane 17 is fully opened under the base load (100%-load) condition.

In contrast, in the first embodiment of the present invention, the opening setting is modified such that the opening of the inlet guide vane 17 at the load of 0% is smaller than the prescribed opening V0 and is held constant under the load condition of 0 - 50%. Thereafter, the operation of increasing the opening of the inlet guide vane 17 is started again from the load of 50%, and the inlet guide vane 17 is fully opened under the base load condition. Accordingly, during a range from an intermediate point in the turbine speed-up zone to the 50%-load condition, the flow rate of the compressed air supplied from the compressor 1 is reduced to be smaller than that obtained at the prescribed opening V0 similarly to the change in the opening of the inlet guide vane 17. Hence the air flow rate at the combustor inlet, i.e., the flow rate of air flowing into the combustor 3, is also reduced correspondingly. With the reduction of the air flow rate at the combustor inlet, the fuel air ratio, i.e., the flow rate ratio of the flow rate of the liquid fuel to the flow rate of the compressed air, is increased from that in the comparative example, whereby the temperature of the combustion gas produced in the combustor is raised. A hatched area in Fig. 3 represents such a temperature rise of the combustion gas.

Thus, by increasing the temperature of the combustion gas in the part load region of the gas turbine, small particulate matter generated with the combustion of the liquid fuel is extinguished through the combustion reaction of the carbonaceous particulate matters. Also, large particulate matters are reduced in size through the combustion reaction, and emissions of the carbonaceous particulate matters can be suppressed eventually.

In this first embodiment, the pressure atomizing liquid fuel injector is mounted to the combustor, and the control is performed such that the flow rate of the working fluid for the compressor is reduced in the part load zone of the gas turbine to be smaller than the flow rate of the working fluid for the compressor, which is set such that the performance of the compressor is maximized.

The feature of the pressure atomizing liquid fuel injector 9 is described here. The pressure atomizing liquid fuel injector 9 is a fuel injector in which the supply pressure of the fuel is raised to increase the fuel jet velocity, thereby promoting atomization of the fuel. The advantages of the pressure atomizing liquid fuel injector 9 reside in that the injector structure is simple because of no need of providing a separate air system unlike the air blast fuel injector, and that the initial cost and the operating cost can be reduced because of not need of an additional medium other than the fuel when the fuel is atomized.

However, under the condition where the supply pressure of the liquid fuel is low (i.e., in the turbine speed-up zone and the part load region of the gas turbine), the atomization is deteriorated. This is because the pressure atomizing liquid fuel injector employed in the gas turbine is designed such that fuel can be injected at a predetermined maximum pressure under the base load condition where the fuel is supplied at a maximum flow rate. Accordingly, under the condition where the fuel flow rate is small as in the part load region, the fuel supply pressure is lowered and the atomization is deteriorated. With a resulting increase in diameter of fuel droplets supplied to the combustion chamber, the mixing of fuel and air is impaired and the oxidation reaction of the fuel is delayed, whereby generation of carbonaceous particulate matters is accelerated. Further, the increase of the fuel droplet diameter enlarges sizes of the carbonaceous particulate matters generated, thus increasing emissions of the carbonaceous particulate matters contained in the combustion gas.

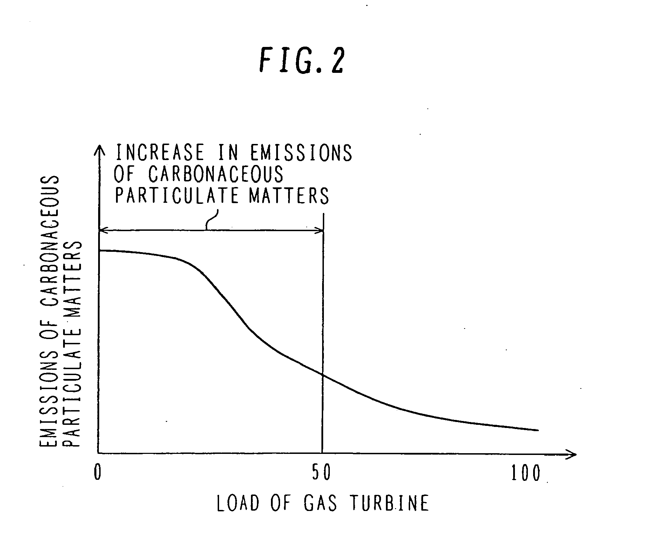

Fig. 2 is a graph showing one example of a characteristic of emissions of carbonaceous particulate matters versus load of the gas turbine, which is obtained in the combustor 3 provided with the pressure atomizing liquid fuel injector 9. The horizontal axis represents the load of the gas turbine, and the vertical axis represents the emissions of the carbonaceous particulate matters. In the combustor 3 provided with the pressure atomizing liquid fuel injector 9, as seen from Fig. 2, the emissions of the carbonaceous particulate matters have a tendency to increase in the part load region and to reduce as the turbine load increases.

The first reason why the emissions of the carbonaceous particulate matters are reduced in the high load region is that the fuel supply pressure is raised with an increase of the fuel flow rate. More specifically, because the supply pressure of the liquid fuel is raised and the atomization is expedited and the mixing of the fuel with the air is promoted, the oxidation reaction is performed with higher efficiency. Further, the decrease of the fuel droplet diameter reduces the size of small particulate matter generated.

The second reason is that the temperature of the combustion gas is also raised with the increase of the turbine load. More specifically, even when the small particulate matter is generated with the combustion reaction, the generated small particulate matter is burnt out and extinguished by being exposed to the high-temperature combustion gas. Further, even when large particulate matters are generated and cannot be burnt out, their sizes are reduced. As a result, total emissions of carbonaceous particulate matters are suppressed.

On the other hand, in the turbine speed-up zone and the part load region of the gas turbine, because the fuel supply pressure is low, it is difficult to suppress the emissions of the carbonaceous particulate matters due to the above-mentioned first reason. In this first embodiment, therefore, the gas turbine is controlled so as to suppress the emissions of the carbonaceous particulate matters in consideration of the above-mentioned second reason (i.e., by raising the temperature of the combustion gas produced in the combustor). More practically, the flow rate of the working fluid for the compressor 1 is reduced to be smaller than that set to maximize the performance of the compressor 1 in the part load region of the gas turbine, thereby increasing the fuel air ratio in the combustion chamber and raising the temperature of the combustion gas. Thus, the emissions of the carbonaceous particulate matters can be suppressed in the part load region while ensuring the advantages of the pressure atomizing liquid fuel injector.

Also, in this first embodiment, the flow rate of the working fluid for the compressor 1 is reduced in the part load region of the gas turbine, i.e., in the turbine speed-up zone and the load-up zone, by controlling the opening of the inlet guide vane 17 to be lower than the prescribed opening V0 which is prescribed such that neither surging nor icing is caused in the compressor 1 and the performance of the compressor 1 is maximized in consideration of the blade shape performance of the compressor 1 as well. Accordingly, the air flow rate at the inlet of the combustor is reduced and the fuel air ratio in the combustor is increased, whereby the temperature of the combustion gas is raised. By so using the inlet guide vane 17 as means for reducing the flow rate of the working fluid for the compressor 1, the emissions of the carbonaceous particulate matters can be suppressed even when the supply pressure of the liquid fuel is low. Further, because of no need of adding new equipment to the existing gas turbine system, it is possible to suppress the emissions of the carbonaceous particulate matters at a low cost in the existing gas turbine system provided with the pressure atomizing liquid fuel injector, and to ensure the advantages of the present invention without adding new equipment even in urban areas where an installation space is restricted.

Note that the above description is made to merely explain one example of setting for the opening of the inlet guide vane 17 in order to suppress the emissions of the carbonaceous particulate matters in the part load region. Stated another way, the opening of the inlet guide vane 17 and the load region where the flow rate of the compresses air is to be reduced are not limited to the above-described setting example, and they can be, of course, optionally set within the range in which soundness of the compressor 1 and the turbine 2 can be held.

### [Second Embodiment]

A second embodiment differs from the first embodiment in controlling, in the construction of Fig. 1, the bleed system which is disposed to branch from the intermediate stage of the compressor 1 and includes the bleed duct 19 and the bleed valve 20. The other components of a gas turbine plant are the same as those in the first embodiment.

More specifically, in the turbine speed-up zone and the part load region of the gas turbine where the emissions of the carbonaceous particulate matters are increased, the bleed valve 20 is opened to release a part of the working fluid (compressed air) bled from the compressor 1 toward the exhaust diffuser 18 disposed at the outlet of the turbine 2. As a result, the flow rate of the compressed air 13 supplied to the combustor 3 is reduced and the emissions of the carbonaceous particulate matters can be suppressed for the same reason as that described in the first embodiment.

### [Third Embodiment]

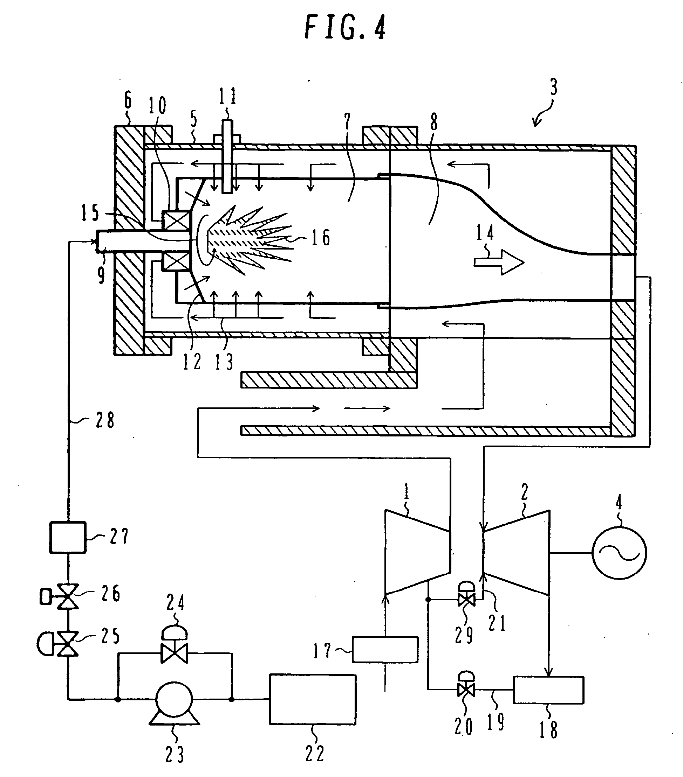

A third embodiment will be described below with reference to Fig. 4. In the third embodiment, a control valve 29 capable of controlling an air flow rate is installed in the cooling air duct 21, which is disposed to bleed the air from an intermediate position of the main flow passage in the compressor 1, for control of the flow rate of cooling air introduced to the high-temperature section of the turbine 2.

Generally, the cooling air bled from the main flow passage in the compressor 1 and introduced to the high-temperature section of the turbine 2 is always supplied at a predetermined air flow rate (i.e., at a predetermined air distribution ratio) so that the turbine blade temperature will not exceed a metal temperature limit. To that end, an orifice or the like is installed in the cooling air duct 21 for control of the flow rate of the cooling air in many cases.

In this third embodiment, the diameter of the cooling air duct 21 is increased from that in the case where the orifice is installed in the cooling air duct 21, thus enabling the cooling air to be distributed to the high-temperature section of the turbine 2 at a larger flow rate than when the orifice is installed in the cooling air duct 21. In addition, the control valve 29 is installed midway the cooling air duct 21 instead of the orifice. With such an arrangement, in the turbine speed-up zone and the part load region of the gas turbine where the emissions of the carbonaceous particulate matters are increased, the cooling air is supplied to the high-temperature section of the turbine 2 at a larger flow rate than the case including the orifice. As a result, the flow rate of the compressed air 13 supplied to the combustor 3 is further reduced and the emissions of the carbonaceous particulate matters can be suppressed for the same reason as that described in the first embodiment.

Also, according to this third embodiment, even when the temperature of the combustion gas produced in the combustor 3 is raised as a result of employing the above-described control method, the flow rate of the cooling air supplied to the turbine 2 is increased by an amount corresponding to the reduction of the flow rate of the compressed air 13 supplied to the combustor 3. Consequently, cooling of the turbine 2 is intensified and reliability of the turbine 2 can be improved.

According to the first to third embodiments, as described above, the emissions of the carbonaceous particulate matters can be suppressed by controlling the flow rate of the compressed air flowing into the combustor 3. In addition, an effect of further suppressing the emissions of the carbonaceous particulate matters can be expected by injecting water or steam to the combustor in combination with the first to third embodiments.

The present invention is widely applicable to any types of combustion equipment provided with pressure atomizing liquid fuel injectors.

## Claims

1. A control method of a gas turbine comprising a compressor (1) for compressing air as a working fluid and producing compressed air (13), a combustor (3) for burning the compressed air from said compressor (1) and liquid fuel, and a turbine (2) driven by combustion gas (14) discharged from said combustor (3), the control method comprising the steps of:
mounting a fuel injector (9) which injects the liquid fuel in a pressure atomizing manner in said combustor (3); and **characterized by**
reducing a flow rate of the working fluid for said compressor (1) in a part load region of said gas turbine to be smaller than a reference flow rate of the working fluid for said compressor (1), said reference flow rate being set such that in said part load region neither surging nor icing is caused in the compressor (1) and said reference flow rate being set so as to increase the fuel air ratio in said combustor (3) in said part load region of said gas turbine.

2. The control method of the gas turbine according to Claim 1, wherein the step of reducing a flow rate of the working fluid for said compressor (1) is performed by controlling an opening of an inlet guide vane (17) which is installed at an inlet of said compressor (1) and controls an intake air flow rate.

3. The control method of the gas turbine according to Claim 1, wherein the step of reducing a flow rate of the working fluid for said compressor (1) is performed by installing, in said compressor, a bleed line which comprises a bleed duct (19) and a bleed valve (20) for releasing.a part of the working fluid for said compressor (1) to the atmosphere, and by controlling an opening of said bleed valve (20).

4. The control method of the gas turbine according to Claim 1, wherein the step of reducing a flow rate of the working fluid for said compressor is performed by installing, in said compressor (1), a cooling air duct (21) through which a part of the working fluid is bled and used as cooling air for cooling turbine blades, and by controlling an opening of a control valve (29) disposed in said cooling air duct (21).

## Patentansprüche

1. Steuerverfahren für eine Gasturbine, mit einem Verdichter (1) zum Verdichten von Luft als Arbeitsmedium und zum Erzeugen verdichteter Luft (13), eine Brennkammer (3) zum Verbrennen der verdichteten Luft von dem Verdichter (1) und von flüssigem Kraftstoff, und mit einer Turbine (2), die von Verbrennungsgas (14) angetrieben wird, das von der Brennkammer (3) ausgestoßen wird, wobei das Steuerverfahren die folgenden Schritte umfasst:
Anbringen einer Kraftstoffeinspritzvorrichtung (9), die den flüssigen Kraftstoff druckzerstäubt in die Brennkammer (3) einspritzt; und **gekennzeichnet durch**
Verringern einer Strömungsgeschwindigkeit des Arbeitsmediums für den Verdichter (1) in einem Teillastbereich der Gasturbine, so dass sie kleiner als eine Bezugsströmungsgeschwindigkeit desArbeitsmediums für den Verdichter (1) ist, wobei die Bezugsströmungsgeschwindigkeit so eingestellt ist, dass in dem Teillastbereich weder Pumpen noch Vereisung im Verdichter (1) verursacht wird, und die Bezugsströmungsrate so eingestellt ist, dass sie das Kraftstoff/Luft-Verhältnis in der Brennkammer (3) in dem Teillastbereich der Gasturbine erhöht.

2. Steuerverfahren für die Gasturbine nach Anspruch 1, wobei der Schritt des Verringerns einer Strömungsgeschwindigkeit des Arbeitsmediums für den Verdichter (1) durch Steuern einer Öffnung einer Einlassleitschaufel (17) durchgeführt wird, die an einem Einlass des Verdichters (1) eingebaut ist und eine Einlassluftströmungsrate steuert.

3. Steuerverfahren für die Gasturbine nach Anspruch 1, wobei der Schritt des Verringerns einer Strömungsrate des Arbeitsmediums für den Verdichter (1) durchgeführt wird, indem in dem Verdichter eine Abzapfleitung eingebaut wird, die einen Abzapfkanal (19) und ein Abzapfventil (20) zum Freisetzen eines Teils des Arbeitsmediums für den Verdichter (1) in die Umgebung umfasst, und indem eine Öffnung des Abzapfventils (20) gesteuert wird.

4. Steuerverfahren für die Gasturbine nach Anspruch 1, wobei der Schritt des Verringerns einer Strömungsrate des Arbeitsmediums für den Verdichter durchgeführt wird, indem in dem Verdichter (1) ein Luftkühlungskanal (21) eingebaut wird, durch den ein Teil des Arbeitsmediums abgezapft und als Kühlungsluft zum Kühlen von Turbinenschaufeln verwendet wird, und indem eine Öffnung eines Steuerventils (29), das in dem Luftkühlungskanal (21) angeordnet ist, gesteuert wird.

## Revendications

1. Procédé de commande d'une turbine à gaz comportant un compresseur (1) pour comprimer de l'air sous forme d'un fluide de travail et produire de l'air comprimé (13), une chambre de combustion (3) pour brûleur l'air comprimé en provenance dudit compresseur (1) et un carburant liquide, et une turbine (2) entraînée par un gaz de combustion (14) évacué de ladite chambre de combustion (3), le procédé de commande comportant l'étape consistant à:
monter un injecteur de carburant (9) lequel injecte le carburant liquide par pulvérisation par air dans ladite chambre de combustion (3), et **caractérisé par**
l'étape consistant à réduire un débit du fluide de travail pour ledit compresseur (1) dans une zone de charge partielle de ladite turbine à gaz afin qu'il soit inférieur à un débit de référence du fluide de travail pour ledit compresseur (1), ledit débit de référence étant établi de sorte que dans ladite zone de charge partielle le compresseur (1) ne soit soumis ni à un pompage ni à un givrage et ledit débit de référence étant établi de manière à augmenter le rapport carburant-air dans ladite chambre de combustion (3) de ladite zone de charge partielle de ladite turbine à gaz.

2. Procédé de commande de la turbine à gaz selon la revendication 1, dans lequel l'étape consistant à réduire un débit du fluide de travail pour ledit compresseur (1) est exécutée en commandant une ouverture d'une aube directrice d'entrée (17) laquelle est installée au niveau d'un orifice d'admission d'air dudit compresseur (1) et commande un débit d'air entrant.

3. Procédé de commande de la turbine à gaz selon la revendication 1, dans lequel l'étape consistant à réduire un débit du fluide de travail pour ledit compresseur (1) est exécutée en installant, dans ledit compresseur, une ligne de purge laquelle comporte une conduite de purge (19) et une soupape de purge (20) pour libérer une partie du fluide de travail pour ledit compresseur (1) dans l'atmosphère, et en commandant une ouverture de ladite soupape de purge (20).

4. Procédé de commande de la turbine à gaz selon la revendication 1, dans lequel l'étape consistant à réduire un débit du fluide de travail pour ledit compresseur est exécutée en installant, dans ledit compresseur (1), une conduite d'air de refroidissement (21) à travers laquelle une partie du fluide de travail est purgée et utilisée en tant qu'air de refroidissement pour refroidir des aubes de turbine, et en commandant une ouverture d'une soupape de commande (29) disposée dans ladite conduite d'air de refroidissement.
